# EUROPEAN PATENT APPLICATION

(11) **EP 1 669 626 A2**
(43) Date of publication of application: **14.06.2006**
(21) Application number: 05027025.5
(22) Date of filing: 09.12.2005
(51) Int. Cl.: F16D 48/00

(54) **Clutch control device, clutch control method, and saddle-ride type vehicle**

(30) Priority: 10.12.2004 JP 2004359223
(71) Applicant: YAMAHA HATSUDOKI KABUSHIKI KAISHA, Iwata-shi Shizuoka-ken (JP)
(72) Inventor: Zenno, Toru, Iwata-shi Shizuoka-ken (JP); Kamo, Atsushi, Iwata-shi Shizuoka-ken (JP)
(74) Representative: Grünecker, Kinkeldey, Stockmair & Schwanhäusser Anwaltssozietät

(57) **Abstract**

The present invention relates to a device for control of connection and disconnection of a clutch of a saddle-ride type vehicle by means of a clutch actuator, being configured to put the clutch in a disconnected state on condition that a brake is applied in case of detection of an operation for starting use of the saddle-ride type vehicle.

## Description

The present invention relates to a clutch control device, a clutch control method, and a saddle-ride type vehicle, and more particular, to clutch control at the start of using a saddle-ride type vehicle.

Conventionally, there are known automatic transmissions of automobiles for electronic control of gear shift and connection/disconnection of a clutch on the basis of a pattern preset according to an operating condition of a vehicle. Such automatic transmissions include ones, in which when the key switch is turned OFF and engine speed and vehicle speed become zero, the clutch is engaged and then control is terminated (for example, see JP-UM-B-6-8903). With this construction, the clutch is put in a connected state at the time of stopping, and it is possible to prevent a vehicle from moving naturally, so that stopping on a slope, or the like can be performed appropriately.

The related art is directed to four-wheeled vehicles, and four-wheeled vehicles usually comprise a parking brake. Therefore, even when a clutch is put in a disconnected state at the start of using a vehicle in case of stopping with the clutch in a connected state, the vehicle will not move provided that a parking brake is used. In most case, however, saddle-ride type vehicles such as motorcycles, etc. are not equipped with any parking brake, and so it is desirable to take measures so that when the clutch is in a disengaged state, the saddle-ride type vehicle is prevented from moving inadvertently.

The invention has been thought of in view of the above problem and has its object to provide a clutch control device, a clutch control method, and a saddle-ride type vehicle capable of preventing the vehicle from moving inadvertently in the case where the clutch is put in a disconnected state at the start of using the saddle-ride type vehicle.

For the apparatus aspect, this objective is solved in an inventive manner by a device for control of connection and disconnection of a clutch of a saddle-ride type vehicle by means of a clutch actuator, being configured to put the clutch in a disconnected state on condition that a brake is applied in case of detection of an operation for starting use of the saddle-ride type vehicle.

According to a preferred embodiment, the device further comprises operation detection means configured to detect the predetermined operation for starting use of the saddle-ride type vehicle, brake application detection means configured to detect application of a brake of the saddle-ride type vehicle, and clutch control means configured to put the clutch in a disconnected state upon the detection of application of the brake in the case where the predetermined operation for starting use is detected.

Preferably, the predetermined operation for starting use is one of making a key switch of the saddle-ride type vehicle ON.

According to a further preferred embodiment, the device further comprises gear engagement judgment means configured to judge whether the transmission gears of the saddle-ride type vehicle are engaged, and wherein the clutch control means is configured to put the clutch in a disconnected state upon the detection of application of the brake in the case where the predetermined operation for starting use is detected and the transmission gears are engaged.

Beneficially, the clutch actuator for operating a clutch comprises a rotating member, wherein a clutch operating member and an elastic expansion member are supported at the rotating member and are configured to individually exert torque on the rotating member, and wherein when the rotating member rotates in a first direction to move the clutch operating member in a direction of clutch connection, the elastic expansion member and the clutch operating member bias the rotating member in the first direction at a rotational position of the rotating member in which the clutch is put in a connected state.

Further, beneficially the clutch actuator comprises the rotating member journaled so as to be rotatable and rotationally driven by the actuator, a clutch operating member, one end of which being pushed by a push force of a clutch spring provided on the clutch and the other end of which being journaled by the rotating member and the clutch operating member acting to put the clutch in a disconnected state against the push force of the clutch spring, and an elastic expansion member, one end of which being supported on the vehicle and the other end of which being journaled by the rotating member, and the elastic expansion member comprising an elastic member, which expands or contracts by itself, wherein the rotating member rotating in a first direction causes the clutch operating member to move in the direction of clutch connection, and wherein the elastic expansion member and the clutch operating member are configured to bias the rotating member so as to cause the same to rotate in the first direction in the case where the clutch in put in a connected state.

The above objective is further solved by a saddle-ride type vehicle comprising the device for control of connection and disconnection of a clutch according to one of the above embodiments.

For the method aspect, the objective is solved in an inventive manner by a method for control of connection and disconnection of a clutch of a saddle-ride type vehicle by means of a clutch actuator, comprising an operation detection step of detecting a predetermined operation for starting use of the saddle-ride type vehicle, a brake application detection step of detecting application of a brake of the saddle-ride type vehicle, and a clutch control step of putting the clutch in a disconnected state upon detection of application of the brake in the case where the predetermined operation for starting use is detected.

In the following, the present invention is explained in greater detail with respect to several embodiments thereof in conjunction with the accompanying drawings, wherein:
- Fig. 1: is a side view showing an outward appearance of a motorcycle (a saddle-ride type vehicle) according to an embodiment,
- Fig. 2: is a view showing a hardware configuration of a clutch and a transmission control system, according to the embodiment, which are mounted on a motorcycle,
- Fig. 3: is a view showing the construction of a sensor/switch group,
- Fig. 4: is a view showing transition of control state when a main key is operated,
- Fig. 5: is a flowchart illustrating a main-key off time control,
- Fig. 6: is a flowchart illustrating a main-key on time control,
- Fig.7: is a view schematically showing a whole construction of a clutch control system, and
- Fig. 8: is a graph illustrating the relationship among torque imparted to a rotating member from a clutch side, torque imparted to the rotating member by an auxiliary spring, and a composite torque thereof.

A preferred embodiment will be described below in detail with reference to the drawings.

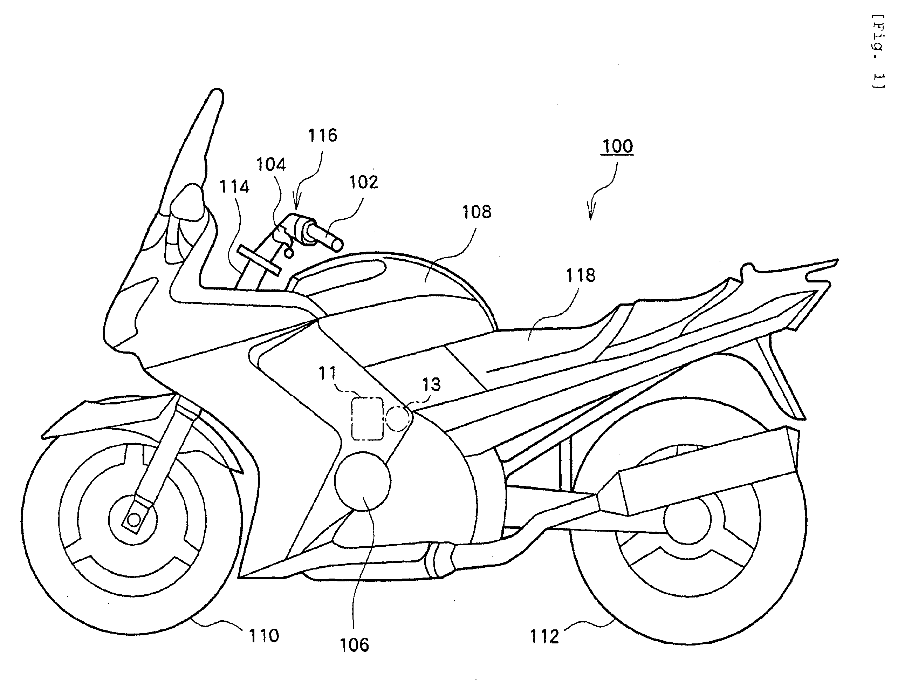

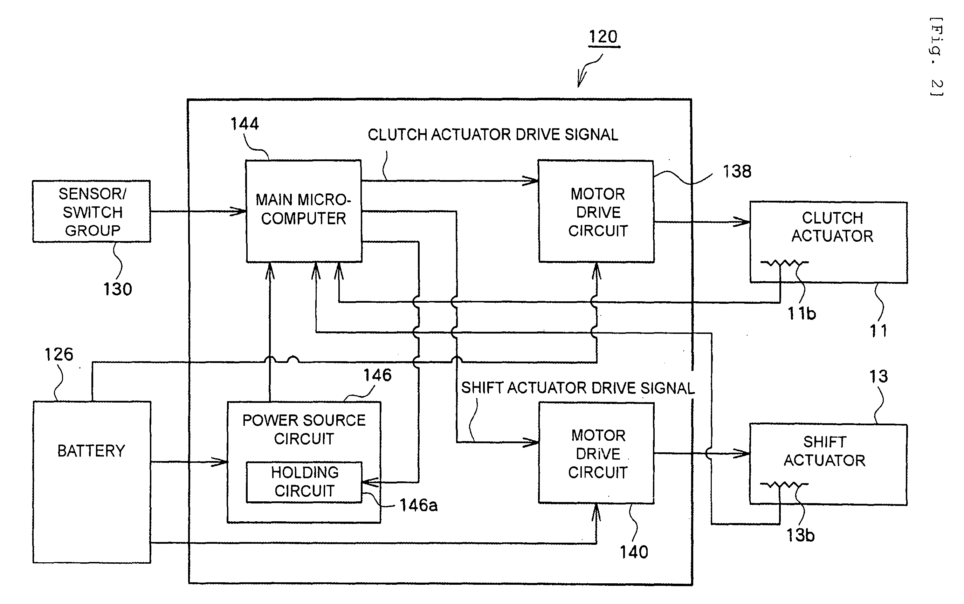

Fig. 1 is a side view showing an outward appearance of a motorcycle according to an embodiment. The motorcycle 100 shown in the figure is an embodiment of a saddle-ride type vehicle and comprises a front wheel 110 and a rear wheel 112, and a handle 116 extending transversely relative to the vehicle forward traveling direction is mounted to a top of a front fork 114 mounted to the front wheel 110. The handle 116 has mounted at one end a grip 102 and a clutch lever 104 and at the other end an accelerator grip and a brake lever (not shown). Also, a seat 118 is provided on an upper portion of the motorcycle 100 and a rider can ride the motorcycle 100 while straddling the seat 118. The motorcycle 100 is substantially the same in construction as known motorcycles, and has a feature in that a clutch actuator 11, which uses a motor to operate a clutch provided in a crankcase of an engine 106, is mounted above the engine 106, that is, below a fuel tank 108. Further, another feature is that a shift actuator 13 is also provided to use a motor to operate a transmission provided in a transmission casing of the engine 106. The clutch actuator 11 is controlled in operation by a control device 120 (see Fig. 2), and the connecting and disconnecting application of the clutch are performed not by human power but by a drive force such as electric power. Also, the shift actuator 13 is controlled in operation by the control device 120 and the shift operation of the transmission is performed by the shift actuator 13. In addition, the clutch lever 104 is connected to the clutch actuator 11 by means of a length of wire, so that connection and disconnection of the clutch can be also performed by the clutch lever 104.

Fig. 2 is a view showing a whole construction of a control system mounted on the motorcycle 100. Connected to the control device 120 are a sensor/switch group 130, the clutch actuator 11, and the shift actuator 13. A battery 126 is also connected to the control device 120 and electric power of the battery 126 is supplied to the control device 120. The electric power is also supplied to the clutch actuator 11 and the shift actuator 13 via the control device 120. Thus the electric power of the battery 126 is used to operate the control device 120 and to operate the clutch actuator 11 and the shift actuator 13.

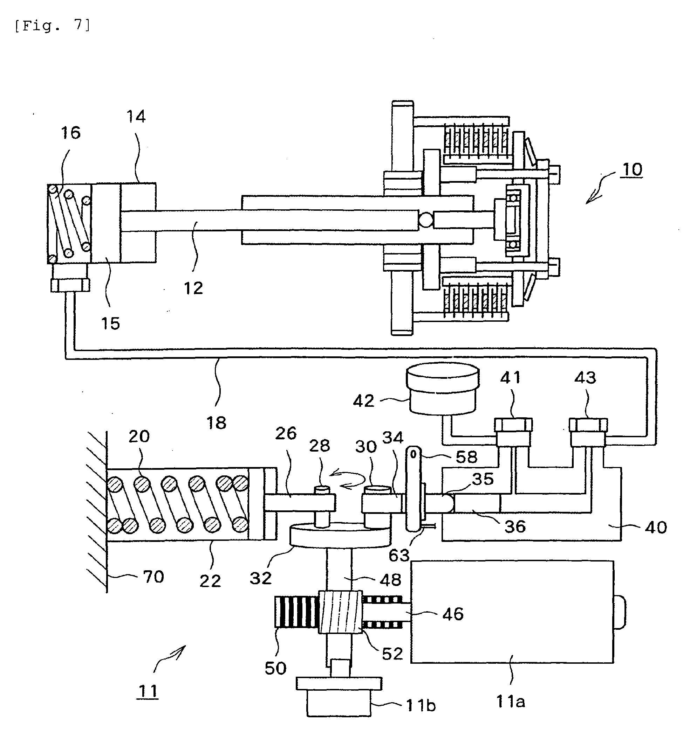

The clutch actuator 11 includes a dc motor 11 a (Fig. 7). Forward rotation of the dc motor 11 a can put the clutch in a disconnected state, and reverse rotation of the dc motor can put the clutch again in a connected state, or set the clutch to a desired position between the disconnected state and the connected state. Also, mounted to the clutch actuator 11 is a clutch potentiometer 11 b composed of a resistor, etc., so that voltage indicative of a state of the clutch actuator 11, that is, voltage indicative of a clutch position is applied to the control device 120 and the voltage value is used as information of clutch position by the control device 120. The motorcycle 100 comprises a single clutch, and torque of the engine 106 is input into the transmission by the action of the same clutch.

Likewise, the shift actuator 13 also includes a dc motor (not shown), normal rotation of which can cause shift-up and reverse rotation of which can cause shift-down. The shift actuator 13 is mounted to a shift arm of the transmission. The dc motor is rotated forward to turn the shift arm in one direction and reversely rotated to turn the shift arm in a reverse direction. The shift actuator 13 is mounted with a shift potentiometer 13b composed of a resistor, etc., so that voltage indicative of a state of the shift actuator 13, that is, voltage indicative of a turning angle of the shift arm, is applied to the control device 120 and the voltage value is used as information of a turning angle of the shift actuator by the control device 120. The transmission is constructed to be able to be set to neutral and number of speed ratios including 1-speed to 5-speed, and comprises, for example, a known dogmission.

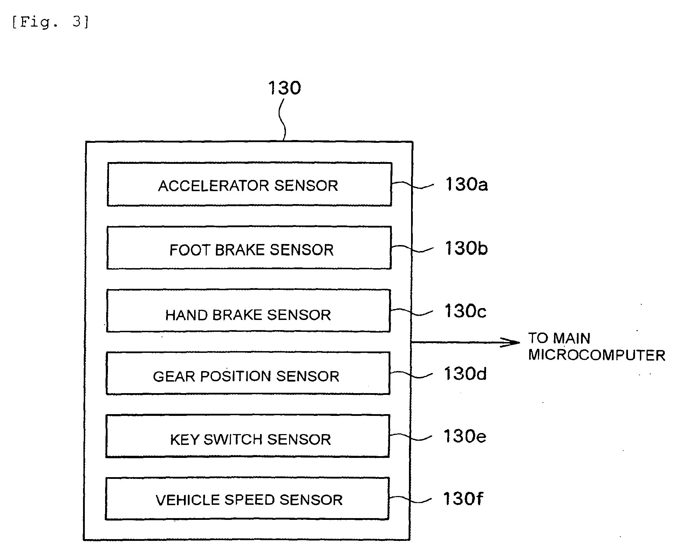

Also, the sensor/switch group 130 comprises, as shown in Fig. 3, an accelerator sensor 130a, a foot brake sensor 130b, a hand brake sensor 130c, a gear position sensor 130d, a key switch sensor 130e, and a vehicle speed sensor 130f. The accelerator sensor 130a detects the accelerator opening degree and inputs this value into the control device 120. Also, the foot brake sensor 130b inputs into the control device 120 the tread angle of a rear wheel brake mounted to the rear wheel 112, or data indicative of whether the rear wheel brake is being pushed down. The gear position sensor 130d is mounted to the transmission to input into the control device 120 data indicative of a present speed ratio (degree of rotation of the shift drum). The key switch sensor 130e detects the state (ON or OFF or the like) of a key switch and inputs this into the control device 120. The vehicle speed sensor 130f detects data indicates vehicle speed (or information equivalent thereto) and inputs this into the control device 120. The vehicle speed sensor 130f may detect the number of rotations of the drive shaft of the transmission (with a counter shaft), or detect movement of the chain which is connected to the drive shaft without play, of the shaft drive, or the tire hub, in order to compute the vehicle speed. Also, the vehicle speed may be obtained by detecting the rotating speed of a main shaft and a middle shaft (an idler shaft) of the transmission, and multiplying the value thereof by a reduction ratio of the present gear position (number) of the transmission.

Referring again to Fig. 2, the control device 120 chiefly comprises a main microcomputer 144 which controls operation of the clutch actuator 11 and operation of the shift actuator 13 on the basis of various information indicating the state of the vehicle input from the sensor/switch group 130, the clutch potentiometer 11 b, and the shift potentiometer 13b.

Here, respective elements of the control device 120 are described. The control device 120 comprises the main microcomputer 144, a power circuit 146, a motor drive circuit 138 that drives the clutch actuator 11, and a motor drive circuit 140 that drives the shift actuator 13.

The power circuit 146 comprises a switch (not shown) that interlocks with the key switch to be made ON, and a holding circuit 146a. When the switch is made ON, the power circuit 146 applies voltage of the battery 126 to drive the main microcomputer 144. After the key switch is made OFF, the power circuit switch is held in an ON state by the holding circuit 146a. The power circuit 146 continues application of the drive voltage until the shutdown processing of the main microcomputer 144 is completed. When the shutdown processing is completed, the main microcomputer 144 instructs the holding circuit 146a to stop supply of electric power, so that supply of electric power to the main microcomputer 144 from the power circuit 146 is stopped.

The motor drive circuit 138 comprises a known H bridge circuit. The motor drive circuit 138 feeds electric current of the battery 126 to a dc motor, which forms the clutch actuator 11, in a manner to rotate the dc motor in the direction and at the speed corresponding to the clutch actuator drive signal supplied from the main microcomputer 144. Likewise, the motor drive circuit 140 comprises a known H bridge circuit. The motor drive circuit 140 feeds electric current of the battery 126 to a dc motor, which forms the shift actuator 13, in the direction and at the speed corresponding to the shift actuator drive signal supplied from the main microcomputer 144.

The main microcomputer 144 comprises a known computer to control operations of the clutch actuator 11 and the shift actuator 13 on the basis of various information indicating the state of the vehicle, input from the sensor/switch group 130, the clutch potentiometer 11 b, and the shift potentiometer 13b. Also, after the key switch is made OFF, the main microcomputer executes the shutdown processing, and when the shutdown processing is terminated, the main microcomputer instructs the holding circuit to stop supply of electric power.

An explanation will here be given of the control (in particular, clutch control) when a main key (a key switch) is made ON and when the main key is made OFF in the motorcycle 100 constructed in the manner described above.

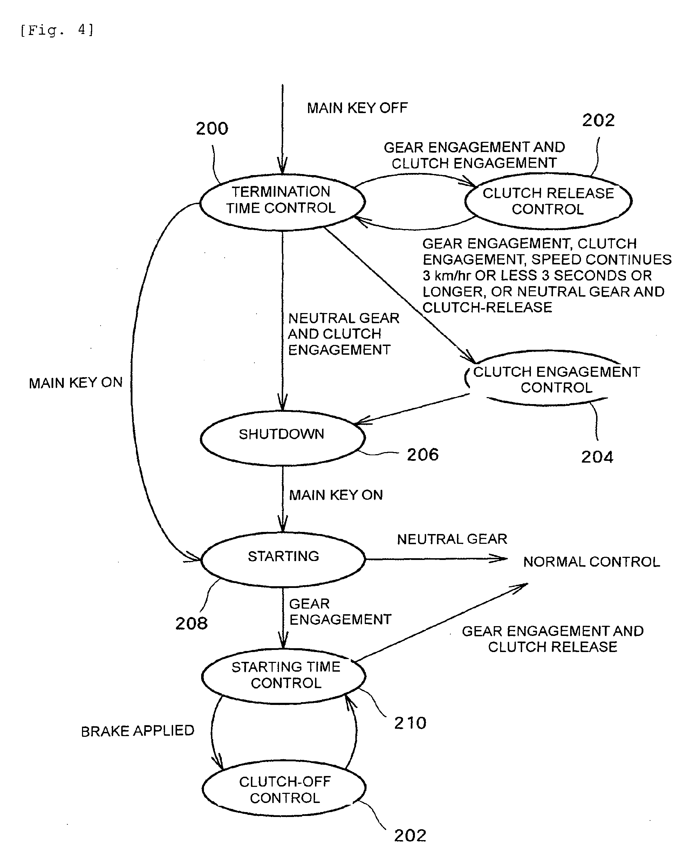

Fig. 4 is a view showing transition of a control state when the main key is OFF and when the main key is ON. As shown in the figure, the main microcomputer 144 executes a termination time control program 200, a clutch release control program 202, a clutch engagement control program 204, a shutdown program 206, a starting program 208, and a starting time control program 210. These programs are beforehand stored in a ROM (information storage medium) included in the main microcomputer 144. The termination time control program 200 is executed in the case where data indicative of the key switch being made OFF is input from the key switch sensor 130e, and starts the clutch release control program 202 in case of gear engagement and clutch engagement. When the clutch is put in a disconnected state by the clutch release control program 202, control by the termination time control program 200 is restarted. In addition, gear engagement corresponds to the case where data are input from the gear position sensor 130d to indicate a state, in which the transmission of the motorcycle 100 is put in any one of the numbers of speed, that is, the transmission is set to 1-speed to 5-speed (except neutral). Also, clutch engagement corresponds to the case where clutch position data are obtained by the clutch potentiometer 11 b to indicate that the clutch is put in a connected state (the clutch is ON).

Also, the termination time control program 200 executes the clutch engagement control program 204 in case of gear engagement, clutch release, and vehicle stopping, or in case of neutral gear and clutch release. After the clutch is put in a connected state by the clutch engagement control program 204, the shutdown program 206 is executed. Here, clutch release is confirmed in the case where clutch position data obtained by the clutch potentiometer 11 b indicates that the clutch is in a disconnected state (the clutch is OFF). Vehicle stopping is confirmed in the case where vehicle state data input from the vehicle speed sensor 130f indicate a predetermined speed (for example, a speed per hour of 3 km) or less, for a predetermined time (for example, 3 seconds). The predetermined speed is one at which the vehicle can be estimated to be substantially stationary, and one, at which even when the clutch is connected, the motorcycle 100 does not begin to move. Neutral gear is confirmed in the case where data indicating that the transmission of the motorcycle 100 is in a neutral state are input from the gear position sensor 130d. Also, the termination time control program 200 starts the shutdown program 206 in case of neutral gear and clutch engagement. Further, when data indicative of the key switch being made ON are input in the middle of termination time control, the starting program 208 is executed.

The clutch release control program 202 is a control program that feeds a clutch actuator drive signal of a predetermined pattern to the motor drive circuit 138 to rotate forward the dc motor 11a and put the clutch in a disconnected state. On the other hand, the clutch engagement control program 204 is a control program that feeds a clutch actuator drive signal of a predetermined pattern to the motor drive circuit 138 to reversely rotate the dc motor 11 a and put the clutch in a connected state.

The shutdown program 206 performs a processing of stopping an operation of the main microcomputer 144 and here especially feeds to the holding circuit 146a a signal for instruction of stoppage of supply of electric power. Thereby, supply of electric power to the main microcomputer 144 from the power circuit 146 is stopped.

The starting program 208 is executed in the case where the key of the motorcycle 100 is inserted into the key switch to be turned toward an ON side (main key on) while the stopping time or termination time control program 200 is executed. It is judged based on output of the key switch sensor 130e that the key is inserted into the key switch to be turned toward an ON side. The starting program 208 initializes settings of parts of the control device 120 and judges whether the transmission of the motorcycle 100 is put in a neutral state. In case of neutral, the starting program shifts to normal control (stopping state control, traveling state control, shift-up control, shift-down control, clutch release and shift-up control, clutch release and shift-down control, etc.). The starting program 208 starts the starting time control program 210 provided that the transmission gears of the motorcycle 100 are engaged at the time for starting. The starting time control program 210 monitors whether the brake acts, and starts the clutch release control program 202 when the brake acts (the brake is made ON). Thereby, when the brake is put in a disconnected state, control by the starting time control program 210 is resumed and in case of gear engagement and clutch release, the starting program shifts to normal control. In addition, whether the brake is applied is judged by inputs from the foot brake sensor 130b and the hand brake sensor 130c. Specifically, in the case where data indicating that the rear wheel brake is applied are input from the foot brake sensor 130b, or data indicating that the front wheel brake is applied are input from the hand brake sensor 130c, it is judged that the brake is applied. Here, it is judged that the brake of the motorcycle 100 is applied provided that either the front wheel brake or the rear wheel brake is applied, but it may be judged that the brake of the motorcycle 100 is not applied unless both brakes are applied.

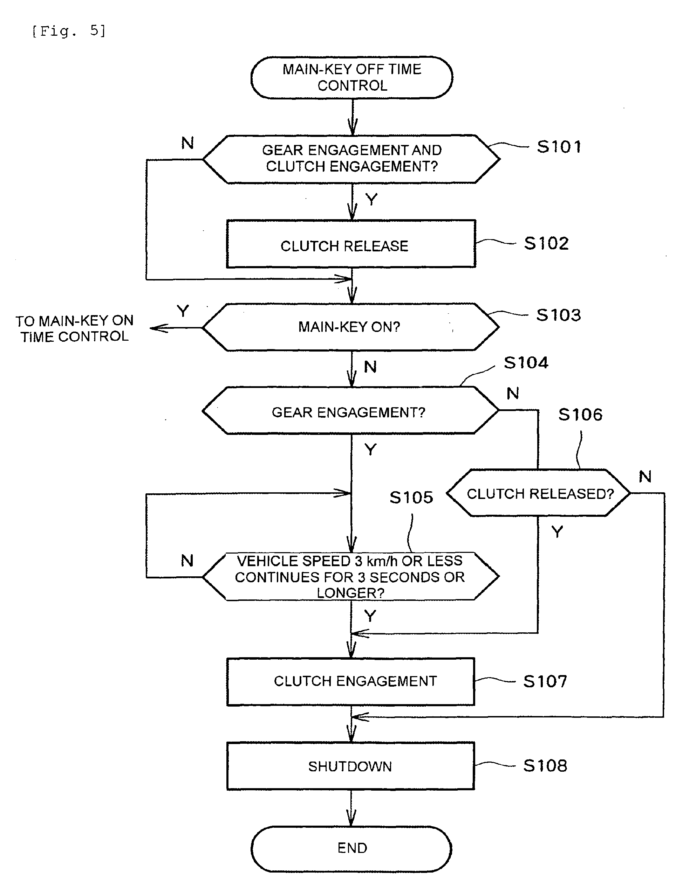

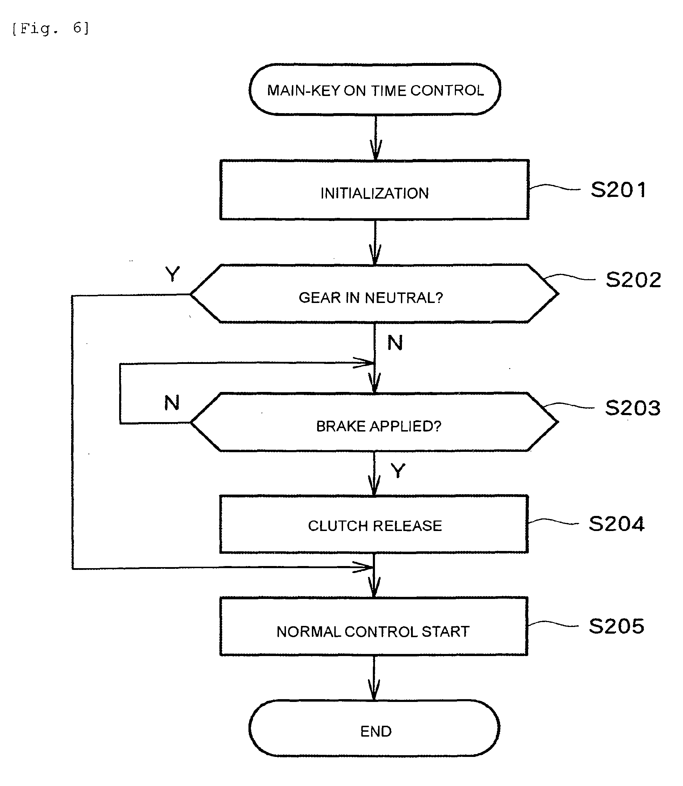

Here, a more detailed explanation is given of control at the time of main-key off and at the time of main-key on. Fig. 5 is a flowchart illustrating a main-key off time control in the motorcycle 100. As shown in the figure, whether the vehicle is in a state of gear engagement and clutch engagement is checked first at the time of main-key off by the termination time control program 200 (S101). In case of gear engagement and clutch engagement, the clutch release control program 202 puts the clutch in a disconnected state (S102). On the other hand, if either the gears are not engaged or the clutch is not engaged, S102 is skipped. Subsequently, the termination time control program 200 judges whether the key switch is made ON (S103). When the key switch is made ON, the control shifts to the main key-on-time control (Fig. 6). On the other hand, when the key switch is not made ON, it is judged whether the transmission gears of the motorcycle 100 are engaged (S104). In case of gear engagement, the control stands by until the state in which the vehicle speed is equal to or less than a predetermined speed (for example, 3 km/h) continues for a predetermined period of time (for example, 3 seconds) or longer (S105). When a state, in which the vehicle speed is equal to or less than the predetermined speed continues for a predetermined period of time or longer, the clutch is put in a connected state by the clutch engagement control program 204 (S107). Also, when it is judged in S104 that the transmission gears of the motorcycle 100 are not engaged (neutral), it is then judged whether the clutch is made OFF (S106). When the clutch is made OFF, the clutch is put in a connected state by the clutch engagement control program 204 (S107). When the clutch is put in a connected state in S107, the shutdown program 206 subsequently executes a shutdown processing (S108), and then the main-key off time control is terminated. When it is judged in S 106 that the clutch is not disengaged, the clutch is not put in a connected state, the shutdown processing is executed by the shutdown program 206 with the clutch as it is (S108), and then the main-key off time control is terminated.

According to the main-key off time control, it is possible to stop the motorcycle 100 after the clutch is surely put in a connected state, so that it is possible to prevent the vehicle from moving naturally even in the case where the motorcycle 100 stops on, for example, a slope.

Subsequently, Fig. 6 is a flowchart illustrating a main-key on time control in the motorcycle 100. The processing illustrated in the figure is executed in the case where the key switch is made ON, and the starting program 208 performs various initializing processings (S201). Subsequently, it is judged whether the transmission is put in a neutral state (S202). In case of neutral, the control shifts to normal control as it is (S205). On the other hand, in case the transmission is not in neutral (gears engaged), the starting time control program 210 stands by until the brake is made ON (S203). When the brake is made ON, the clutch release control program 202 puts the clutch in a disconnected state (S204). Thereafter, the control shifts to normal control (S205).

When the transmission is put in a neutral state, the main-key on time control shifts to normal control with the vehicle as it is (with the clutch in a connected state), and when the transmission gears are engaged, the clutch is put in a disconnected state after the brake is applied. That is, the action of the clutch at the time of main-key on can be varied depending on whether gear engagement or neutral gear is effected at the time of main-key off. In the case where the main key is made OFF in a state of gear engagement, parking on a slope can be effected appropriately, and also in the case where the main key is made ON, the clutch is put in a disconnected state on condition that the brakes are applied, so that it is possible to surely prevent the vehicle from moving inadvertently.

Here, a more detailed explanation is given of the construction of the clutch actuator 11. Fig. 7 is a view schematically showing a whole construction of the clutch control system mounted on the motorcycle 100. According to the embodiment, for example, a wet type multiple-disc clutch 10 is accommodated in a crankcase of the engine 106. The clutch 10 can be put in a connected state or in a disconnected state through the medium of a push rod 12. The clutch 10 comprises a clutch spring whose biasing force pushes a clutch disc which is joined to a crankshaft (on a drive side), against a friction disc joined to a transmission main shaft (on a driven side). Therefore, the clutch 10 is put in a connected state at normal times. The clutch 10 can be put in a semi-clutched state by pushing the push rod 12 toward the clutch 10 against the push force of the clutch spring, and put in a disconnected state by further pushing the push rod.

With the clutch control system, the push rod 12 of the clutch 10 is pushed by a hydraulic mechanism. The hydraulic mechanism comprises an oil hose 18 for passage of oil, a clutch release cylinder 14 connected to one end of the oil hose, and a master cylinder 40 connected to the other end of the oil hose through a connector 43. Built in the clutch release cylinder 14 are a piston 15 that is pushed by oil flowing from the oil hose 18, and a clutch release spring 16 that biases the piston 15 toward the clutch 10. When the oil flows in from the oil hose 18, the piston 15 is moved toward the clutch 10, thereby pushing the push rod 12. As a result, the clutch 10 is put in a semi-clutched state or in a disconnected state. Conversely, when inflow of the oil from the master cylinder 40 disappears, the push rod 12 is pushed back by the clutch spring, the piston 15 returns to an original position, and the clutch 10 returns to a connected state.

A reservoir tank 42 is connected to the master cylinder 40 through a connector 41, and a hydraulic pressure correcting function is realized by the reservoir tank 42.

The clutch actuator 11 comprises the master cylinder 40 and a mechanism that exerts pushing pressure on a piston 36 of the master cylinder 40 and releases such pushing pressure. Specifically, the piston 36 of the master cylinder 40 is pushed by a first piston push rod 35 (a clutch operating member, a first piston pushing pressure mechanism), and a manipulation arm 58 and a second piston push rod 34 are provided in a manner to be able to abut independently against the first piston push rod 35. The manipulation arm 58 is connected to the clutch lever 104 through a length of wire 63, and when a rider of a saddle-ride type vehicle manipulates the clutch lever 104, the manipulation arm 58 is moved by the wire 63. Thereby, the manipulation arm 58 pushes the first piston push rod 35 and the piston 36 is pushed toward the interior of the master cylinder 40. Also, when the rider returns the clutch lever 104 to its original position, the manipulation arm 58 is returned to its initial position whereby the piston 36 is also returned to its original position.

The second piston push rod 34 is driven by the dc motor 11 a included in the clutch actuator 11 to push the first piston push rod 35 independently of the manipulation arm 58, whereby the piston 36 is pushed toward the interior of the master cylinder 40. Also, when the dc motor 11 a rotates reversely, the second piston push rod 34 returns to its initial position (a clutch connection position) and the clutch 10 correspondingly returns to a connected state.

As described above, a force that operates the clutch 10 in a direction of connection is applied to the push rod 12 by the clutch spring provided in the clutch 10. Therefore, in order to cause the second piston push rod 34 to push the piston 36, the dc motor 11 a must rotate a rotating member 32 against such force. Thus, in the clutch actuator 11, an auxiliary spring 22 is further mounted to the rotating member 32 to allow the dc motor 11 a to have decreased output power. That is, the rotating member 32 comprises a rotating shaft 28 for mounting of the auxiliary spring 22, in addition to a rotating shaft 34 for mounting of the second piston push rod 34. The rotating shaft 28 is provided in parallel to a rotating shaft 48 on the other side of the rotating member 32. The auxiliary spring 22 comprises a first auxiliary spring shaft 26, and one end of the first auxiliary spring shaft 26 is journaled rotatably on the rotating shaft 28. The other end of the auxiliary spring 22 abuts against an inner wall of an actuator casing 70, in which respective elements of the clutch actuator 11 are accommodated. Built in the auxiliary spring 22 is a coil spring 20 that is contracted in a state to be shorter than a natural length and thus exerts pressure to expand. One end of the auxiliary spring 22 is supported by the inner wall of the actuator casing 70 fixed on a vehicle side and the other end thereof pushes the first auxiliary spring shaft 26 toward the rotating member 32. That is, an elastic force of the coil spring 20 causes the first auxiliary spring shaft 26 to push the rotating shaft 28 in a direction of expansion, thus imparting an auxiliary torque to the rotating shaft 28.

In addition, on a worm wheel 50 is mounted the clutch potentiometer 11 b composed of a resistor, etc., so that a voltage value corresponding to a rotation angle of the rotating member 32 can be output. The voltage value is input into the control device 120 to be used for control of an operation of the dc motor 11 a or the like. That is, the control device 120 determines the rotation angle of the rotating member 32 from the output of the clutch potentiometer 11 b and so is able to set the rotating member 32 to a desired rotation angle between an angle (angle of connection) at which there is connection of the clutch 10 and an angle (angle of disconnection) at which there is disconnection of the clutch 10. In addition, the rotation of a rotating shaft 46 of the motor 10 may be detected for use in control.

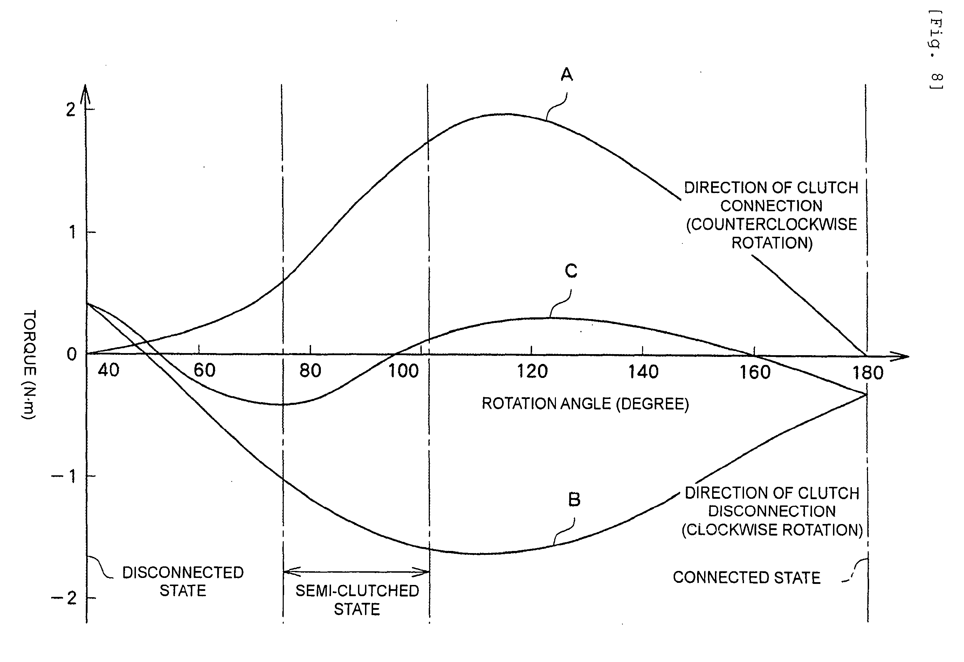

Here, an explanation is given of torque acting on the rotating member 32. Fig. 8 is a graph illustrating the relationship among torque (a curve A in the figure) imparted to the rotating member 32 by the second piston push rod 34, torque (a curve B in the figure) imparted to the rotating member 32 by the auxiliary spring 22, and a composite torque thereof (a curve C in the figure). The ordinate in the figure indicates torque, and torque having a negative value acts to rotate forward the rotating member 32 to push the second piston push rod 34 toward the master cylinder 40, thereby effecting disconnection of the clutch 10. Also, torque having a positive value acts to reversely rotate the rotating member 32 to retum the second piston push rod 34 to its original position away from the master cylinder 40, thereby effecting connection of the clutch 10. The abscissa in the figure indicates the rotation angle of the rotating member 32 with the angle of connection being 40 degrees and the angle of disconnection being 180 degrees.

As indicated by the curve A in the figure, the clutch spring natural length is that at which the clutch 10 is in the connected state, and torque imparted to the rotating member 32 by the second piston push rod 34 is zero at the rotation angle of connection. Thereafter, when the rotating member 32 is rotated in a direction of disconnection, torque gradually increases in the direction of connection. Thereafter, as the rotating member 32 is further rotated, the rotating shaft 48 of the rotating member 32 approaches the direction in which the second piston push rod 34 is extended and torque imparted to the rotating member 32 by the second piston push rod 34 begins to decrease. In a disconnected state of the clutch 10, the clutch spring is put in a state of being contracted most but the rotating shaft 48 of the rotating member 32 is positioned on the extension line of the second piston push rod 34 and torque imparted to the rotating member 32 by the second piston push rod 34 becomes zero.

Also, as indicated by the curve B in the figure, when the clutch 10 is engaged, torque in a direction of connection is imparted to the rotating member 32 by the auxiliary spring 22. When the rotating member 32 is rotated in the direction of disconnection of the clutch, torque becomes zero, and when the rotating member is further rotated, torque becomes negative. That is, the position of the auxiliary spring 22 and the position of the rotating shaft 28 are regulated so that torque in the direction of connection of the clutch is imparted to the rotating member 32 when it is at the rotation angle of connection, and torque in the direction of disconnection of the clutch is imparted to the rotating member 32 when it is at a rotation angle of a semi-clutched state. Thereafter, when the rotating member 32 is rotated in the direction of disconnection of the clutch, torque in the direction of disconnection of the clutch is increased as the auxiliary spring 22 is extended in a direction separating away from the rotating shaft 48 of the rotating member 32. When the rotating member 32 is further rotated, the auxiliary spring 22 approaches its natural length and torque in the direction of disconnection of the clutch returns to a small value.

As indicated by the curve C in the figure, in a major part of an angular range of the rotating member 32, torque imparted by the second piston push rod 34 and torque imparted by the auxiliary spring 22 act in opposite directions to offset each other.

Therefore, the composite value of torque imparted to the rotating member 32 becomes a small value, so that the rotating member 32 can be readily rotationally driven by the dc motor 11 a. However, at the rotation angle of connection, the composite torque acts in the direction of connection of the clutch. Therefore, it is possible to stabilize the clutch 10 in a connected state. Also, at the rotation angle of disconnection, a composite torque acts in a direction of disconnection of the clutch. Therefore, it is possible to stabilize the clutch 10 in a disconnected state. Further, at a rotation angle corresponding to the semi-clutched state of the clutch 10, when the rotating member 32 is rotated in a direction of disconnection of the clutch, torque in a direction of connection of the clutch is generated, and on the other hand, when the rotating member 32 is rotated in a direction of connection of the clutch, torque in a direction of disconnection of the clutch is generated. Therefore, it is possible to stabilize the clutch 10 in the semi-clutched state.

That is, with the clutch actuator 11, even when the dc motor 11 a does not apply a drive force on the rotating member 32, the rotating member 32 is made stable at three rotation angles, that is, the rotation angle of connection, a rotation angle corresponding to the semi-clutched state, and the rotation angle of disconnection.

Further, the rotating member 32 is actually made stable at all rotation angles. That is, various types of friction are generated in actual operation of the clutch control system. Also, a self-locking effect of a certain degree is produced in the worm wheel 50 and worm gear 52, so that even when torque is imparted to the rotating member 32, the worm gear 52 acts to make it difficult for the rotating member 32 to rotate. As described above, with the clutch actuator 11, a composite torque acting on the rotating member 32 becomes a small value in either direction of rotation, so that the clutch actuator 11 can maintain the state of the clutch 10 as it is even when the dc motor 11a stops at any rotation angle of the rotating member 32.

The description above discloses (amongst others) an embodiment of a clutch control device for connection and disconnection of a clutch of a saddle-ride type vehicle by means of a clutch actuator, the clutch control device comprising operation detection means that detects a predetermined operation for starting use of the saddle-ride type vehicle, brake application detection means that detects application of a brake of the saddle-ride type vehicle, and clutch control means that puts the clutch in a disconnected state upon detection of application of the brake in the case where the predetermined operation for starting use is detected.

Also, the description above discloses an embodiment of a clutch control method for connection and disconnection of a clutch of a saddle-ride type vehicle by means of a clutch actuator, the clutch control method comprising the steps of an operation detection step of detecting a predetermined operation for starting use of the saddle-ride type vehicle, a brake application detection step of detecting application of a brake of the saddle-ride type vehicle, and a clutch control step of putting the clutch in a disconnected state upon detection of application of the brake in the case where the predetermined operation for starting use is detected.

According to the above embodiments, in the case where the predetermined operation for starting use is detected, the clutch is put in a disconnected state upon detection of application of the brake. The brake is for example, a foot brake or a hand brake. According to the embodiments, the clutch can be put in a disconnected state during application of the brake, and so a saddle-ride type vehicle can be prevented from moving inadvertently at the start of use.

According to a further embodiment, the predetermined operation for starting use is one, in which a key switch of the saddle-ride type vehicle is made ON. According to this embodiment, it is possible to surely judge the start of use.

Also, according to a further embodiment, gear engagement judgment means which judges whether the transmission gears of the saddle-ride type vehicle are engaged, is further provided, and the clutch control means puts the clutch in a disconnected state upon detection of application of the brake in the case where the predetermined operation for starting use is detected and the transmission gears are engaged. In the case where the transmission gears are engaged, there is a high possibility that the vehicle is stopped on a slope. According to this embodiment, stopping on a slope is assumed if the transmission gears are engaged, and the vehicle can be surely prevented from moving when use of a saddle-ride type vehicle, which is assumed to be stopped on a slope, is started. Here, gear engagement corresponds to the case where the transmission is put in other positions than neutral, and a main shaft and a transmission output shaft interlock with each other.

Also, according to a further embodiment, the clutch actuator comprises a rotating member journaled to be rotatable and rotationally driven by the actuator, a clutch operating member, one end of which is pushed by a push force of a clutch spring provided on the clutch and the other end of which is journaled by the rotating member, the clutch operating member acting to put the clutch in a disconnected state against the push force of the clutch spring, and an elastic expansion member, one end of which is supported on the vehicle and the other end of which is journaled by the rotating member, the elastic expansion member comprising an elastic member which expands or contracts by itself, wherein the rotating member rotates in a first direction which moves the clutch operating member in a direction of clutch connection, and the elastic expansion member and the clutch operating member bias the rotating member to rotate in the first direction in the case where the clutch is put in a connected state. According to this embodiment, the clutch can be made stable and parking on a slope can be effected appropriately.

Also, the description discloses a saddle-ride type vehicle comprising any one of the above clutch control devices. The saddle-ride type vehicle includes, for example, motorcycles (includes bicycles with a motor (a motorbike))/a scooter), four-wheeled buggies (overall terrain type vehicles), snowmobiles, etc. According to the embodiments, it is possible to realize a saddle-ride type vehicle that does not move inadvertently even when a clutch is put in a disconnected state at the start of use.

The description above discloses, as a particularly preferred embodiment, in order to provide a clutch control device capable of preventing a vehicle from moving when operation of a saddle-ride type vehicle is begun, a clutch control device for connection and disconnection of a clutch of a saddle-ride type vehicle by means of a clutch actuator comprises operation detection means that detects a predetermined operation (for example, ON of a key switch, or the like) for starting use of the saddle-ride type vehicle, brake application detection means that detects application of a brake of the saddle-ride type vehicle, and clutch control means that puts the clutch in a disconnected state upon detection of application of the brake in the case where the predetermined operation for starting use is detected.

## Claims

1. Device for control of connection and disconnection of a clutch of a saddle-ride type vehicle by means of a clutch actuator, being configured to put the clutch in a disconnected state on condition that a brake is applied in case of detection of an operation for starting use of the saddle-ride type vehicle.

2. Device according to claim 1, further comprising:
operation detection means configured to detect the predetermined operation for starting use of the saddle-ride type vehicle,
brake application detection means configured to detect application of a brake of the saddle-ride type vehicle, and
clutch control means configured to put the clutch in a disconnected state upon the detection of application of the brake in the case where the predetermined operation for starting use is detected.

3. Device according to claim 1 or 2, wherein the predetermined operation for starting use is one of making a key switch of the saddle-ride type vehicle ON.

4. Device according to one of the claims 1 to 3 further comprising:
gear engagement judgment means configured to judge whether the transmission gears of the saddle-ride type vehicle are engaged, and
wherein the clutch control means is configured to put the clutch in a disconnected state upon the detection of application of the brake in the case where the predetermined operation for starting use is detected and the transmission gears are engaged.

5. Device according to one of the claims 1 to 4, wherein the clutch actuator for operating a clutch comprises: a rotating member, wherein a clutch operating member and an elastic expansion member are supported at the rotating member and are configured to individually exert torque on the rotating member, and wherein when the rotating member rotates in a first direction to move the clutch operating member in a direction of clutch connection, the elastic expansion member and the clutch operating member bias the rotating member in the first direction at a rotational position of the rotating member in which the clutch is put in a connected state.

6. Device according to claim 5, wherein the clutch actuator comprises:
the rotating member journaled so as to be rotatable and rotationally driven by the actuator,
a clutch operating member, one end of which being pushed by a push force of a clutch spring provided on the clutch and the other end of which being journaled by the rotating member and the clutch operating member acting to put the clutch in a disconnected state against the push force of the clutch spring, and
an elastic expansion member, one end of which being supported on the vehicle and the other end of which being journaled by the rotating member, and the elastic expansion member comprising an elastic member, which expands or contracts by itself,
wherein the rotating member rotating in a first direction causes the clutch operating member to move in the direction of clutch connection, and wherein the elastic expansion member and the clutch operating member are configured to bias the rotating member so as to cause the same to rotate in the first direction in the case where the clutch in put in a connected state.

7. Saddle-ride type vehicle comprising the device for control of connection and disconnection of a clutch according to one of the claims 1 to 6.

8. Method for control of connection and disconnection of a clutch of a saddle-ride type vehicle by means of a clutch actuator, comprising:
an operation detection step of detecting a predetermined operation for starting use of the saddle-ride type vehicle,
a brake application detection step of detecting application of a brake of the saddle-ride type vehicle, and
a clutch control step of putting the clutch in a disconnected state upon detection of application of the brake in the case where the predetermined operation for starting use is detected.
